# EUROPEAN PATENT SPECIFICATION

(11) **EP 1 729 453 B1**
(45) Date of publication and mention of the grant of the patent: **30.07.2008**
(21) Application number: 05011736.5
(22) Date of filing: 31.05.2005
(51) Int. Cl.: H04L 12/437, H04L 12/24, H04L 12/46

(54) **Method for protection switching**
Methode zur Schutzumschaltung
Procédé de commutation de protection.

(43) Date of publication of application: 06.12.2006
(73) Proprietor: Nokia Siemens Networks GmbH & Co. KG, 81541 München (DE)
(72) Inventor: Ricardo de Frias Rebelo Nunes, Pedro, 2795-016 Linda-A-Velha (PT)

(56) References cited:
- EP-A- 1 432 178
- US-A1- 2004 223 503
- US-B1- 6 430 151
- US-B1- 6 766 482
- SHAH M YIP EXTREME NETWORKS S: "Extreme Networks' Ethernet Automatic Protection Switching (EAPS) Version 1" IETF STANDARD, INTERNET ENGINEERING TASK FORCE, IETF, CH, October 2003 (2003-10), XP015009401 ISSN: 0000-0003

## Description

The invention relates to a method for protection switching in a data network according to claim 1.

Data networks including a plurality of data rings share certain ring spans to enable protection switching and, therefore, prevent single points of failures. However, if Ethernet technology or a similar technology is chosen for data transmission such a topology creates additional problems, because it is necessary to prevent the formation of loops in the network.

The principle of the Ethernet ring protection mechanism ERP is described in US Patent 6,430,151. A redundancy manager, which is connected to the line ends of a ring containing a plurality of nodes, checks the network by transmitting and receiving test packets. If there is an interruption in the ring, the redundancy manager connects the line ends.

This method is described in detail for one or more rings having a common node, in US Patent 6,766,482 B1 assigned to Extreme Networks and is known as "Ethernet Automatic Protection Switching" EAPS.

An Exsteme networks, Santa Clara, Ca (US) "ExtremeWare 7.1.0 User Guide", pages 281 - 290 describes two data rings with shared nodes and a shared link. One ring includes a controller; the other ring includes a partner. If the common link fails the controller is responsible for blocking to prevent a "super loop". Before the common link comes back the controller goes from a blocking state to a "preforwarding" state, where the ports are still temporarily blocked to prevent a super loop. This protection procedure requires additional exchanges of different control packets between the controller and the partner.

It is an object of the present invention to provide a method which lead to a faster and simpler protection switching.

A method, which solves this problem, is described in claim 1.

The present invention provides a simpler method by allocating different priorities to ring managers and by a simpler protocol containing alarm packets which are sent only to the ring managers having higher priority.

The present invention is described by way of different examples and accompanying drawings. The invention can be extended to a more complex network and to a network similar to the Ethernet. The invention will became more apparent with reference to the following detailed description along with the accompanying drawings, in which
Figure 1 shows a two ring network with two ring managers,
Figure 2 shows a failure in a common span and the new network structure after protection switching,
Figure 3 shows the structure of more complex network with a plurality of shared spans and multiple failures,
Figure 4 shows the structure of a more complex network with a plurality if shared spans and multiple failures, and
Figure 5 shows the network structure after protection switching.

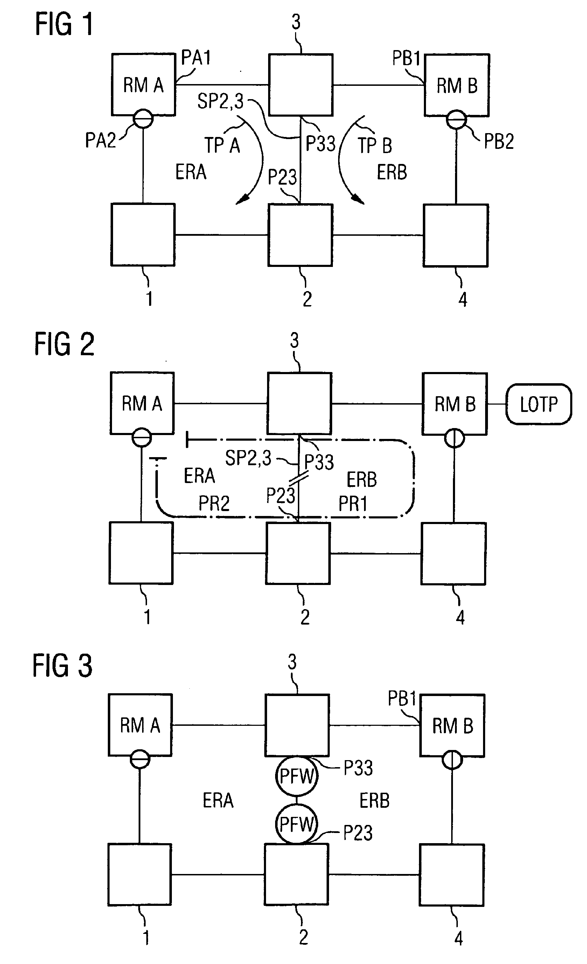

Figure 1 shows a network having two rings. A first ring ERA with nodes 1, 2, 3 including an associated ring manager RMA, and a second ring ERB with nodes 2, 3, 4 including an associated ring manager RMB having a higher priority PR1 than the ring manager RMA with priority PR2. Each port of a ring manager or a node can transmit and receive dates. Both rings ERA and ERB share the span SP2,3 between the "common span nodes" 2 and 3 (a common span node is a node, which has at least a port P33, P23 connected to the common span, or is exceptionally inserted between these "end nodes" of the common span). According to the Ethernet requirements each ring manager RMA, RMB blocks one of its ports, e.g. PA2 and PB2, so there is no connection between the ports PA1 and PA2 or PB1 and PB2, which are shown on different sides of the ring managers in the drawing, and therefore (data) loops are avoided.

Each ring manager supervises its associated ring. Ring manager RMA supervises Ring ERA by sending "test packets" TPA at the first data port PA1 and receiving these "test packets" at the second port PA2 over a virtual control local area network known as VCLAN, e.g. realized by a different wavelength or time slot on the same fibre, where the data is transmitted. An interruption, e.g. between node 1 and node 2, would prevent the ring manager RMA from receiving its own test packets TPA. The ring manager RMA would determine "loss of test packets" LOTP and unblock the second port PA2. After this protection switching node 1 is connected over ring manager RMA with node 3 and therefore with the network. The ring ERB is controlled in the same way by sending test packets TPB.

When the common span SP2,3 between its common span nodes 2 and 3 is interrupted according to figure 2, the common span nodes 2 and 3 will detect it (no signal is received) and send a "failure message" FSP2,3 only to the ring manager RMB of higher priority PR1, which unblocks its second port PB2. The common span nodes know from their own management data base or from a management system, which ring manager has the highest priority. The unblocking of ring manager RMB leads to the network shown in Figure 2, where all nodes are connected according to this "protection switching" of ring manager RMB. A "super loop", shown as a dotted line, is avoided, because the second port PA2 of ring manager RMA remains blocked. The failure message is also transmitted over the virtual control local area network.

The test packets periodically send by ring manager RMA have an interval of e.g. 50ms between two consecutive test packets and at least two lost packets have to be monitored before the ring manager RMA determines an alarm signal. The protection switching, that is unblocking of the ports of ring manager RMB, occurs in a much shorter time and the test packets of ring manager RMA will be forwarded by ring manager RMB back to ring manager RMA. So the ring manager RMA sees a complete ring and keeps its second port RA2 blocked. It is sufficient and in a more complex network favourable, when the test packets are only transmitted over rings of higher priority.

The detection "loss of test packets" LOTP of ring manager RMB has no consequences, because this ring manager has already unblocked its ports. The transmitting of test packets could be stopped, when the ports are already unblocked.

After the detection of an interruption of the shared span SP2,3 the ports P23, P33 (at least one port) of the common span nodes 2 and 3 facing the common span SP2,3 are set to a "preforward" state PFW as shown in Figure 3, where these ports are blocked. When the common span has recovered, e.g. is repaired, and the ring manager RMB blocks it second port PB2, the common span nodes 2 and 3 will exit this preforward state PFS and unblock their ports (e.g. controlled by the ring manager RMB), so that the original configuration shown in Figure 1 is re-established.

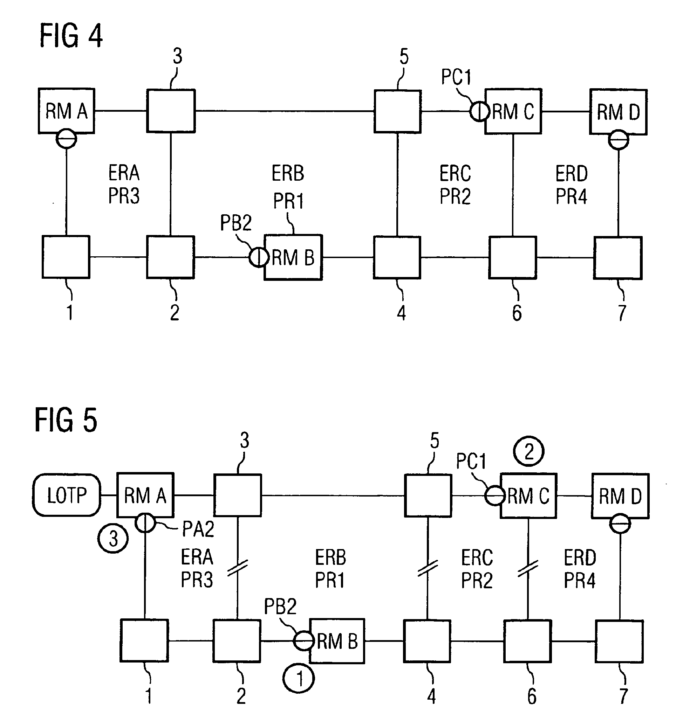

Figur 4 shows a more complex network with four rings and three common spans SP2,3; SP4,5; SP3,C and four ring managers RMA, RMB, RMC, and RMD associated to four rings ERA, ERB, ERC, ERD, each ring manager has a different priority PR3, PR1, PR2, and PR4. This priority is allocated to the associated rings. Only a few nodes 1 - 7 are shown. The ring managers are inserted in the links of the rings. The common spans are between two nodes of adjacent rings, e.g. ERA, and ERB, or between a ring manager, e.g. RMC and a node 6. One port of all ring managers is blocked to avoid a loop. The priority of the ring manager is higher in the centre of the network and becomes lower at the edges.

To make this example more complicated all common spans SP1, SP2 and SP3 may be interrupted at the same time as shown in Figure 5.
1. The nodes 2, 3 (belonging also to ring ERA of priority PR3) and the nodes 4, 5 3 (belonging also to ring ERC of priority PR2) send their "failure (interruption) messages" FSP2,3 and FSP4,5 to the associated ring manager RMB of higher priority PR1. Ring manager RMB unblocks his open port PB2 at time (1).
2. About the same time (2) ring manager RMC of detects the "link down" of common span SP3 and unblocks its open first port PC1.
3. All test packets are forwarded to rings of higher priority. So the test packets of the ring manager RMA respectively ring ERA is forwarded to rings ERB and ERC, and the test message of ring ERD is forwarded to ring ERC, ERB , and ERA. The test packets of ERB are restricted to its own loop ERB. Only the test packets of the rings ERA and ERD are necessary for the protection function because the ports of RMB and RMC are already unblocked. Therefore, the transmission of the test packets of the other ring managers could be stopped. At this time the ring managers RMA of the ring ERA and RMD of the ring ERD are transmitting test packets TPA and TPD. The test intervals for transmitting consecutive test packets of ring managers with lower priority are chosen to be longer than the test intervals of test packets being transmitted by ring managers of higher priority. Therefore, the ring manager RMA with priority PR3 determines "loop down" LOTP before ring manager RMD with priority PR4 and unblocks its second port PA2 at time (3). The test packets of ERD are transmitted over RMC, nodes 5 and 4, RMA, nodes 1,2, RMB, nodes 4, 6 and 7 and received at the blocked port.

In a variation of the method test packets may send to all rings, but they are only transmitted over ring managers with higher priority. Also the failure message FSPXX may be sent to all ring managers, but only the associated ring manager of the broken shared span with higher priority will accept it. This is only a question of the virtual VCLAN and does not influence the function.
- 1, 2, 3, ...: node
- ERA: ring A
- RMA: ring manager A of ring ERA
- SP2,3: shared span between nodes 2 and 3
- FSP2,3: failure message of shared span SP2,3
- TPA: test packet of RMA
- PFW: preforward state

## Claims

1. A method for protection switching in a data network including at least two rings (ERA, ERB) with a shared span (SP2,3) and a plurality of nodes (1-4),
each ring (ERA, ERB) having an associated ring manager (RMA, RMB) for checking its associated ring (ERA, ERB),
**characterised in that**
the ring managers (RMA, RMB) having dedicated different priorities (PR1, PR2),
each shared span node (2,3) is monitoring the shared span (SP2,3) and, in case of a span failure, sends a failure message (FSP2,3) to a ring manager (RMB) of higher priority (PR1) of an associated ring (ERB), and the ring manager (ERB) of higher priority unblocks its port (PB2) while the ring manager (RMA) of lower priority (PR1) maintains its port (PA2) blocked.

2. A method according to claim 1,
**characterised in that**,
each ring manager (RMA) sends test packets (TPA) at one of its ports (PA1) and monitors the reception of this test packet at its second port (PA2) and, if the test packets (TPA) are not received, unblocks its port (PA2).

3. A method according to claim 2,
**characterised in that**,
according to the priority of the ring managers (RMA, RMB, ....) the test packets (TPA, TPB, ....) are transmitted from the ring managers (RMA, RMB, ....) with different time intervals between two successive test packets (TPA).

4. A method according to claim 3,
**characterised in that**,
the time intervals between the test messages (TPB) send by the ring manager (PRB) with high priority (PR1) are shorter than the time intervals between the test messages (TPA) send by the ring manager (PRB) with lower priority (PR2).

5. A method according to claim 2,
**characterised in that**,
the test packets (TPA) of a ring manager (RMA) are only transmitted over links belonging to a ring (ERB, ERC) with higher priority.

6. A method according to claim 2,
**characterised in that**,
the port (P23, P33) of a common span node (2, 3) facing a common span (SP2,3) is set to a preforward state (PFW) till the failure is repaired,
and that the port (P23, P33) of a common span node (2, 3) facing a common span (SP2,3) is unblocked after the ports (PBA, PB2) of the ring managers (RMA, RMB) of the associated rings are blocked, so that a data loop is avoided.

## Patentansprüche

1. Verfahren zur Schutzumschaltung in einem Datennetz mit mindestens zwei Ringen (ERA, ERB) mit einem gemeinsam benutzten Abschnitt (SP2, 3) und mehreren Knoten (1-4), wobei jeder Ring (ERA, ERB) einen zugeordneten Ringmanager (RMA, RMB) zum Prüfen seines zugeordneten Rings (ERA, ERB) aufweist, **dadurch gekennzeichnet, daß**
die Ringmanager (RMA, RMB) fest zugeordnete verschiedene Prioritäten (PR1, PR2) aufweisen,
jeder Knoten (2, 3) eines gemeinsam benutzten Abschnitts den gemeinsam benutzten Abschnitt (SP2, 3) überwacht und im Fall eines Abschnittausfalls eine Ausfallnachricht (FSP2, 3) zu einem Ringmanager (RMB) höherer Priorität (PR1) eines zugeordneten Rings (ERB) sendet und der Ringmanager (ERB) höherer Priorität seinen Port (PB2) entblockiert, während der Ringmanager (RMA) niedrigerer Priorität (PA1) seinen Port (PA2) blockiert hält.

2. Verfahren nach Anspruch 1, **dadurch gekennzeichnet, daß**
jeder Ringmanager (RMA) Testpakete (TPA) an einen seiner Ports (PA1) sendet und den Empfang dieses Testpakets an seinem zweiten Port (PA2) überwacht und seinen Port (PA2) entblockiert, wenn die Testpakete (TPA) nicht empfangen werden.

3. Verfahren nach Anspruch 2, **dadurch gekennzeichnet, daß**
gemäß der Priorität der Ringmanager (RMA, RMB, ...) die Testpakete (TPA, TPB, ...) von den Ringmanagern (RMA, RMB, ...) mit verschiedenen Zeitintervallen zwischen zwei sukzessiven Testpaketen (TPA) gesendet werden.

4. Verfahren nach Anspruch 3, **dadurch gekennzeichnet, daß**
Die Zeitintervalle zwischen den Testnachrichten (TPB), die von dem Ringmanager (PRB) mit hoher Priorität (PR1) gesendet werden, kürzer als die Zeitintervalle zwischen den Testnachrichten (TPA) sind, die von dem Ringmanager (PRB) mit niedrigerer Priorität (PR2) gesendet werden.

5. Verfahren nach Anspruch 2, **dadurch gekennzeichnet, daß**
die Testpakete (TPA) eines Ringmanagers (RMA) nur über Strecken gesendet werden, die zu einem Ring (ERB, ERC) mit höherer Priorität gehören.

6. Verfahren nach Anspruch 2, **dadurch gekennzeichnet, daß**
der Port (P23, P33) eines Knotens (2, 3) eines gemeinsamen Abschnitts, der einem gemeinsamen Abschnitt (SP2, 3) gegenüberliegt, in einen Präweiterleitungszustand (PFW) versetzt wird, bis der Ausfall repariert ist,
und daß der Port (P23, P33) eines Knotens (2, 3) eines gemeinsamen Abschnitts, der einem gemeinsamen Abschnitt (SP2, 3) gegenüberliegt, entblockiert wird, nachdem die Ports (PBA, PB2) der Ringmanager (RMA, RMB) der zugeordneten Ringe blockiert sind, so daß eine Datenschleife vermieden wird.

## Revendications

1. Procédé de commutation de protection dans un réseau de données comprenant au moins deux anneaux (ERA, ERB) partageant un intervalle (SP2,3) et une pluralité de noeuds (1-4),
chaque anneau (ERA, ERB) ayant un gestionnaire d'anneau associé (RMA, RMB) servant à surveiller l'anneau (ERA, ERB) qui lui est associé,
**caractérisé en ce que**
les gestionnaires d'anneau (RMA, RMB) ont des priorités différentes dédiées (PR1, PR2),
chaque noeud d'intervalle partagé (2, 3) surveille l'intervalle partagé (SP2,3) et, en cas d'anomalie de l'intervalle, envoie un message d'anomalie (FSP2, 3) à un gestionnaire d'anneau (RMB) de priorité plus élevée (PR1) d'un anneau (ERB) associé et le gestionnaire d'anneau (ERB) de priorité plus élevée débloque son port (PB2) tandis que le gestionnaire d'anneau (RMA) de priorité moins élevée (PR1) maintient son port (PA2) bloqué.

2. Procédé selon la revendication 1,
**caractérisé en ce que**
chaque gestionnaire d'anneau (RMA) envoie des paquets de test (TPA) au niveau d'un de ses ports (PA1) et surveille la réception de ces paquets de test au niveau de son second port (PA2) et débloque son port (PA2) si les paquets de test (TPA) ne sont pas reçus.

3. Procédé selon la revendication 2,
**caractérisé en ce que**
les paquets de test (TPA, TPB, ...) sont transmis depuis les gestionnaires d'anneau (RMA, RMB, ...) avec des intervalles de temps différents entre deux paquets de test (TPA) successifs en fonction de la priorité des gestionnaires d'anneau (RMA, RMB, ...).

4. Procédé selon la revendication 3,
**caractérisé en ce que**
les intervalles de temps entre les messages de test (TPB) envoyés par le gestionnaire d'anneau (PRB) de priorité élevée (PR1) sont plus courts que les intervalles de temps entre les messages de test (TPA) envoyés par le gestionnaire d'anneau (PRB) de priorité moins élevée (PR2).

5. Procédé selon la revendication 2,
**caractérisé en ce que**
les paquets de test (TPA) d'un gestionnaire d'anneau (RMA) sont transmis uniquement sur des liaisons appartenant à un anneau (ERB, ERC) de priorité plus élevée.

6. Procédé selon la revendication 2,
**caractérisé en ce que**
le port (P23, P33) d'un noeud d'intervalle commun (2, 3) situé face à un intervalle commun (SP2,3) est réglé sur un état de prétransmission (PFW) jusqu'à ce que la anomalie soit réparée,
et **en ce que** le port (P23, P33) d'un noeud d'intervalle commun (2, 3) situé face à un intervalle commun (SP2,3) est débloqué après que les ports (PBA, PB2) des gestionnaires d'anneau (RMA, RMB) des anneaux associés sont bloqués de manière à éviter une boucle de donnée.
